Europäisches Patentamt

European Patent Office

Office européen des brevets

(11) Publication number: **0 387 891**
**A2**

(12) # EUROPEAN PATENT APPLICATION

(21) Application number: **90104983.3**

(51) Int. Cl.5: **G21C 1/02**

(22) Date of filing: **16.03.90**

(30) Priority: **17.03.89 JP 63850/89**

(43) Date of publication of application:
**19.09.90 Bulletin 90/38**

(84) Designated Contracting States:
**DE FR GB NL**

(71) Applicant: **HITACHI, LTD.**
**6, Kanda Surugadai 4-chome**
**Chiyoda-ku, Tokyo 101(JP)**

(72) Inventor: **Masumi, Ryoji**
**3-22-203 Kujicho 7-chome**
**Hitachi-shi(JP)**
Inventor: **Bando, Masaru**
**12-1, Ayukawacho 6-chome**
**Hitachi-shi(JP)**
Inventor: **Kawashima, Katsuyuki**
**15-7-2 Suwacho 4-chome**
**Hitachi-shi(JP)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) **Fast neutron reactor and method of refueling.**

(57) A fast neutron reactor core (1) comprising a bundle of fuel assemblies each containing a fuel made of a fissile material-enriched fertile material. In a transition cycle between an initial charging cycle and an equilibrium cycle of said core, a fuel assembly in a peripheral portion (12) of said core (1) is replaced with a fuel assembly containing a fuel having a greater neutron infinite multiplication factor than the fuel in said equilibrium cycle. Further a method of refueling in such a fast neutron reactor core (1) is disclosed.

# FIG. 1

## FAST NEUTRON REACTOR AND METHOD OF REFUELING

BACKGROUND OF THE INVENTION

FIELD OF THE INVENTION

The present invention relates to a core of a fast neutron reactor and, more particularly, to a method of refueling in a fast breeder core suitable for realizing a transition to a core state which exhibits superior performance.

DESCRIPTION OF THE RELATED ART

Fast neutron reactor features an economical use of fuel due to phenomenon known as "breeding" in which neutrons generated by, for example, by fission in the core are absorbed by a fertile material so as to generate fissile material. In general, the core of such a fast neutron reactor has a plurality of fuel assemblies bundled in a cylindrical or columnar form, each fuel assembly including a plurality of stainless steel cladding tubes each being charged with fuel pellets, the cladding tubes being covered with hexagonal wrapper tube made of a stainless steel. The reactor core is surrounded by axial and radial blankets made of fertile materials so as to improve breeding characteristic. The reactor core is charged with a fissile material as a fuel, e.g., plutonium-enriched uranium, while uranium oxide, for example, is used as the fertile material of blankets. Neutrons leaked from the reactor core is trapped by the fertile material of the blankets so that effective fissile material are produced.

The reaction in the core of a fast neutron reactor progressively decreases as a result of the operation. Periodical refueling is therefore conducted by exchanging a part of the initially-charged fuel with new fuel so as to maintain excess reactivity enough to provide critical state of the reactor core while using the operation of control rods which serve to reduce the reactivity. Thus, when the excess reactivity is too high, it is necessary to employ many control rods so as to maintain the core in critical state, which is not preferred from the view points of economy and operation characteristic of the reactor.

All the fuel assemblies are new in an initial core, so that refueling is conducted periodically. The degree of change in the excess reactivity occurring by partial refueling in an initial core is usually greater than that of an equilibrium core in which no substantial change in the excess reactivity is caused between a cycle and another cycle proceeding thereto. It has been proposed, therefore, to exchange part of the fuel of initial core with a blanket or a diluting assembly of stainless steel so as to maintain the excess reactivity of the initial core substantially at the same level as that in an equilibrium core, as disclosed in Japanese Patent Examined Publication No. 52-6438 or "Proceedings of International Symposium on Fast Breeder Reactors, IAEA-SM-284/74P (1985). It has been proposed also to construct an initial core with fissile material which is of the same type as renewal fuel for equilibrium core and which has a lower enrichment than that of the renewal fuel, thereby suppressing the excess reactivity of the reactor core. These methods are generally referred to as diluted assembly method.

In an initial core constructed in accordance with the diluted assembly method, the power generated in the core is small because the diluted assemblies exhibit small reactivity. Therefore, a part of the initial fuel is replaced with a fuel assembly for equilibrium core in a transition core, the reactivity in the core is increased and, in addition, the new assembly exhibits a greater level of power than surrounding assemblies. This causes an increase in the maximum linear power density and, hence, a reduction in the thermal margin of the fuel.

A discussion will be made as to a transition process for altering a core constitution. In general, a fast neutron reactor core exhibits a greater neutron flux density in the radially central portion of the core than in peripheral portion, due to a difference in the rate of leakage of neutrons from the reactor core. In order to flatten the radial power distribution therefore, it is a common measure to constitute the core by use of a plurality of radially sectioned core regions in which core fuels having enrichment different each other are charged so that radially outer region exhibits a greater degree of enrichment of the fissile material, e.g., 239Pu, 235U and so forth. This type of core is generally referred to as a homogeneous core.

On the other hand, "Proceedings of International Symposium on Fast Breeder Reactors, IAEA-SM-284/18P (1985) discloses so-called an axially heterogeneous core in which a disk-shaped internal blanket composed mainly of a fertile material is disposed in the center of the reactor core. In this axially heterogeneous core, a flat power distribution is obtained with fuel arrangement of uniform fissile enrichment, because of the neutron flux density-flattening effect produced by the internal blanket. It is known that 5% or more reduction in the maximum linear power and 15% or more reduction in fast neutron fluence can be attained in an axially heterogeneous core as compared with homogeneous core.

In order to improve the performance of the core of a fast neutron reactor core which is operating or under construction by making full use of various advantages of axially heterogeneous core, it is necessary to develop suitable means which conducts transition from a homogeneous core to an axially heterogeneous core.

When the state of a core is changed from homogeneous core to an axially heterogeneous core, it is impractical to renew all the fuel because such measure significantly impairs fuel economy and plant available factor. As an alternative measure, therefore, it is considered to progressively replace part of homogeneous core fuel with fuel for axially heterogeneous core. When such measure is taken, it is important that the fuel for axially heterogeneous core is charged without degrading the flatness of the power distribution and that the number of the fuel assemblies to be replaced is not increased, from the view point of safety and economy.

Neutron flux distribution in homogeneous core is entirely different from that of axially heterogeneous core. Thus, flatness of power distribution will be degraded if fuel assemblies for axially heterogeneous core are uniformly dispersed in a homogeneous core. In addition, there will be caused such phenomenon that the excess reactivity is reduced, if fuel assemblies including internal blanket having a small reactivity is charged in the core center where the neutron flux density is high. In such case, if the number of fuel assemblies to be renewed is not increased, there will occur such problem that thermal margin of the core is reduced to require that the operation period be shortened.

## SUMMARY OF THE INVENTION

A first object of the present invention is to provide a method of renewing fuel in a fast neutron reactor, which is capable of providing greater thermal margin of the core than that provided by a conventional diluting assembly method, while maintaining excess reactivity well comparing with that of an equilibrium core, in the initial core and subsequent transition cores, and to provide a fast neutron reactor core which carries out this method.

A second object of the present invention is to provide a method of renewing fuel in a fast neutron reactor which method minimizes the number of fuel assemblies to be renewed so as to reduce the fuel cost, while maintaining sufficiently large thermal margin and excess reactivity in the transition period of the core from homogeneous core to axially heterogeneous core, and to provide a fast neutron reactor which carries out this method.

To meet the first object, the present invention provides a method of renewing fuel in a fast neutron reactor, and a core obtained by this method, in which a fuel assembly in radially inner portion of an initial core is replaced in a transition core with a fuel assembly containing a fuel of the same enrichment of fissile material as a renewal fuel for an equilibrium core, while replacing a fuel assembly in the radially outer region of the initial core with a fuel assembly containing a fuel of a higher enrichment than the renewal fuel for the equilibrium core.

To meet the second object, the present invention provides a method of renewing fuel in a fast neutron reactor, and a core obtained by this method, in which, among a plurality of core regions of different enrichment in a homogeneous core, a fuel assembly placed in an inner region where the enrichment is comparatively low is replaced with an axially heterogeneous assembly which is provided around its axially mid portion with an internal blanket made of a fertile material, while a fuel assembly in a radially outer portion of the core is replaced with a fuel assembly containing a fuel having a higher enrichment than the fuel which is loaded in an axially heterogeneous core obtained after the transition.

According to the fuel renewal method of the invention and the core obtained through the method, the neutron flux density and power density can be decreased in the radially central portion of the reactor core, so that any rise in the power peak level is prevented in the transition core during a change from an initial core to an equilibrium core or from a homogeneous core to an axially heterogeneous core, whereby sufficient thermal margin and excess reactivity can be maintained.

## BRIEF DESCRIPTION OF THE DRAWINGS

Figs. 1, 3, 4, 5 and 6 are horizontal sectional views of first embodiment of a reactor core of the present invention, which views illustrate a first embodiment of the fuel renewing method of the invention (only 1/6 of the whole core is shown);

Fig. 2 is a vertical sectional view of the first embodiment of the present invention;

Fig. 7 is a graph showing linear power distribution characteristics of the first embodiment and of a conventional reactor core;

Figs. 8 and 9 are a horizontal sectional view and a vertical sectional view of a second embodiment of the reactor core of the invention;

Figs. 10 and 11 are a horizontal sectional view and a vertical sectional view of a third embodiment of the reactor core of the invention;

Figs. 12 and 13 are a horizontal sectional view and a vertical sectional view of a fourth embodiment of the reactor core of the present invention;

Figs. 14 and 15 are a horizontal sectional view and a vertical sectional view of a fifth embodiment of the reactor core of the present invention;

Figs. 16 and 17 are a horizontal sectional view and a vertical sectional view of a sixth embodiment of the reactor core of the present invention;

Figs. 18 and 19 are a horizontal sectional view and a vertical sectional view of a seventh embodiment of the reactor core of the present invention;

Figs. 20 and 21 are a horizontal sectional view and a vertical sectional view of a homogeneous core;

Figs. 22 and 23 are a horizontal sectional view and a vertical sectional view of an axially heterogeneous core after a transition;

Figs. 24 and 25 are a horizontal sectional view and a vertical sectional view of a core in a first transition cycle in an eighth embodiment of the invention;

Figs. 26 and 27 are a horizontal sectional view and a vertical sectional view of a core in a second transition cycle in the eighth embodiment of the invention;

Figs. 28 and 29 are a horizontal sectional view and a vertical sectional view of a core in a third transition cycle in the eighth embodiment of the invention;

Fig. 30 is a graph showing a linear output distribution characteristics of the eighth embodiment of the reactor core and of a conventional reactor core;

Figs. 31 and 32 are a horizontal sectional view and a vertical sectional view of a ninth embodiment of the reactor core of the present invention;

Figs. 33 and 34 are a horizontal sectional view and a vertical sectional view of a tenth embodiment of the reactor core of the present invention;

Figs. 35 and 36 are a horizontal sectional view and a vertical sectional view of an eleventh embodiment of the reactor core of the present invention;

Figs. 37 and 38 are a horizontal sectional view and a vertical sectional view of a twelfth embodiment of the reactor core of the present invention; and

Fig. 39 is an illustration of specifications of a reactor core and a fuel.

## DESCRIPTION OF THE PREFERRED EMBODIMENTS

Preferred embodiments of the invention will be described hereinunder with reference to the drawings.

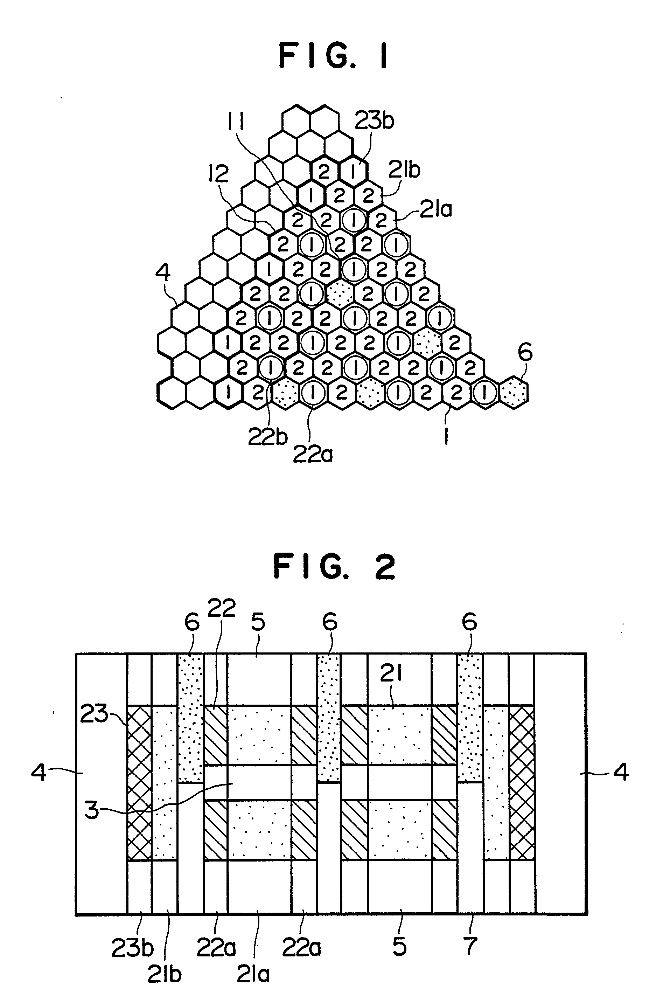

Figs. 1 and 2 are a horizontal sectional view and a vertical sectional view of a first embodiment of the fast neutron reactor core in accordance with the invention. The core shown in these Figures is a second cycle core which is subsequent to an initial core. Only 1/6 of the reactor core is shown in Fig. 1. Thus, the control rod 6 shown at the right-side end of Fig. 1 is actually located at the center of the core, while the center control rod within three control rods 6 shown in Fig. 2 is the center of the core. This is also applied to other Figures showing different embodiments which will be described later.

The core 1 is composed of a multiplicity of fuel assemblies bundled in a columnar form, each fuel assembly having a hexagonal wrapper tube of a stainless steel which tube accommodates a bundle of stainless steel cladding tubes each being charged with fuel pellets containing a mixed oxide formed of plutonium-enriched depleted uranium. A disk-shaped internal blanket 3 composed mainly of depleted uranium is disposed in the core 1 for the purpose of flattening the neutron flux density distribution and power thereof. More specifically, the fuel assemblies charged at their predetermined portions with uranium oxide are bundled so that the portions of the uranium oxide form, as a whole, the disk-shaped internal blanket. In order to improve fuel breeding performance, radial blankets 4 and axial blankets 5 are provided at the outside of the core 1 as shown in Fig. 2. The core 1 also has control rods 6 made of a neutron-absorbing material such as boron carbide, in order to control the excess reactivity in the core while ensuring safety shutdown of the nuclear reactor. Numeral 7 denotes sodium channels.

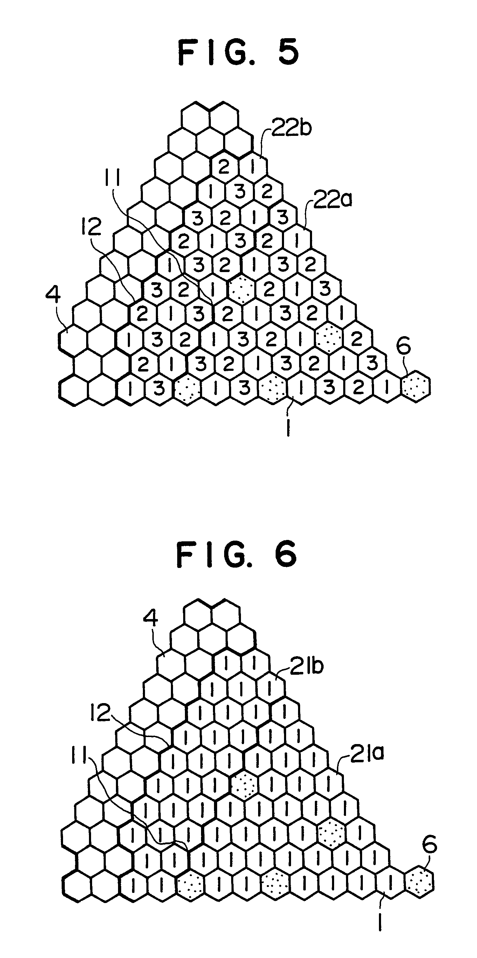

In this embodiment, one third of the whole fuel assemblies is replaced with new fuel assemblies upon completion of each cycle of operation. Thus, so-called fuel renewal batch number is 3 in this embodiment. The core shown in Fig. 1 has been obtained by renewing fuel assemblies 21 of an initial core shown in Fig. 6 in the following manner. Namely, among the fuel assemblies 21 of the initial core, about 1/3 of the fuel assemblies 21a (containing internal blanket) which were initially charged in an inner region 11 of the core 1 has been replaced with equilibrium core fuel assemblies 22a having internal blanket. In addition, about 1/3 of the fuel assemblies 21b (having no internal blanket) charged at radially inner portion of an outer region 12 has been replaced with equilibrium fuel assemblies 22b having no internal blanket. At the same time, about 1/3 of the fuel assemblies 21b which were initially charged along the outer periphery of the outer region 12 has been replaced with transition core fuel assemblies 23b which have a higher enrichment (than equilibrium fuel assemblies 22b) and which have no internal blanket. In Fig. 1, numerals shown in hexagons indicating the fuel assemblies represent the number of residence cycles with respect to the respective fuel assemblies in the core. The fuel rods having residence cycle number of 2, the numbers of staying period of which will reach "3", are replaced with new fuel assemblies. Thus, the fuel assemblies now bearing number "2" (which will bear "3" in the next cycle) is renewed before the cycle subsequent to the next cycle is commenced. A description will be given of the method of renewing fuel assemblies of different types.

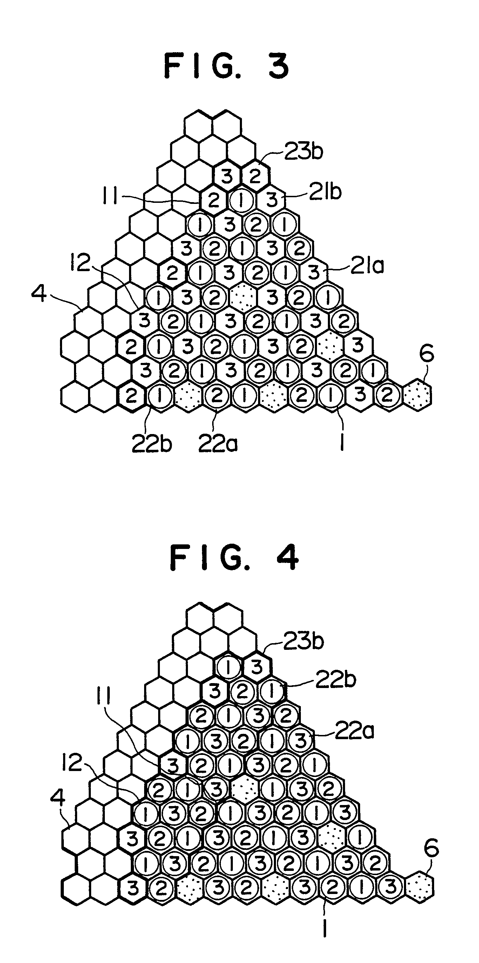

Fig. 3 shows a core in the third cycle. About half of the fuel assemblies 21 which were initially charged and which existed in the second cycle core have been replaced with equilibrium core fuel assemblies 22 to realize this core of the third cycle.

Fig. 4 shows the core in the fourth cycle, the remainder of the initially charged fuel assemblies 21 existed in the third cycle core have been replaced with equilibrium core fuel assemblies 22 so as to realize this fourth cycle core.

Fig. 5 shows the core in the fifth cycle. This fifth cycle core has been obtained by replacing the transition core fuel assemblies 23 existing in the fourth cycle core by equilibrium core fuel assemblies 22.

It is thus possible to smoothly change the initial core into an equilibrium core.

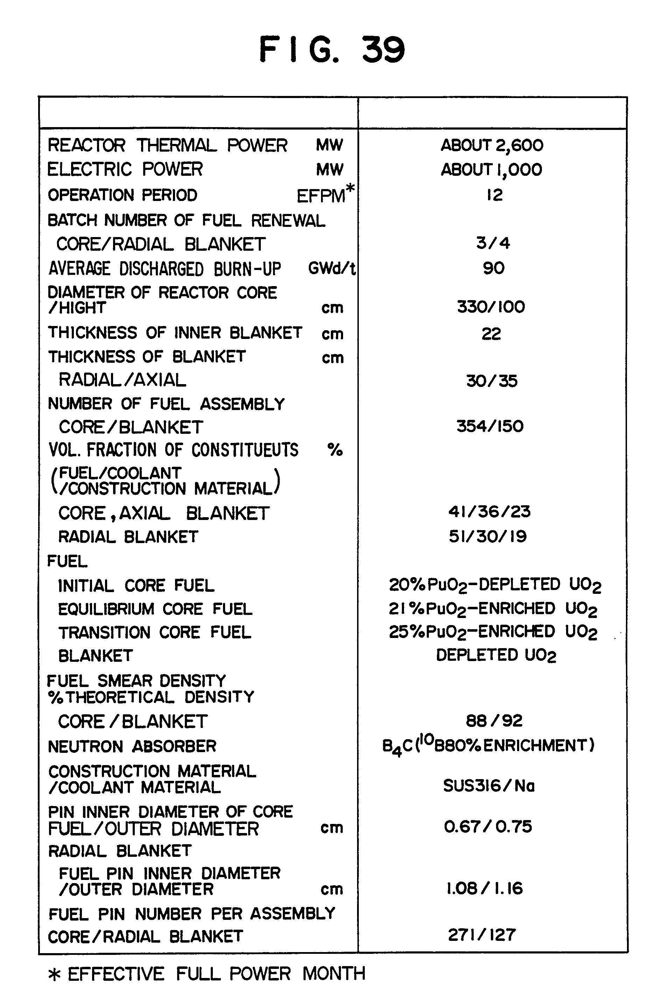

Fig. 39 shows the specifications of the core and the fuel. The nuclear reactor having the described core had thermal power and electrical power of about 2,600 MW and about 1,000 MW, respectively, while core diameter and height of the core were 330 cm and 100 cm, respectively. The axial and radial blankets had thicknesses of 35 cm and 30 cm, respectively. The operation period was 12 months. The refueling batch number of the core was "3", while that for the blankets was "4". The degrees of plutonium enrichment were about 20% in the initially charged fuel, about 21% in the equilibrium core fuel and about 25% in the transition core fuel. Regarding the initial core fuel assemblies 21 and equilibrium core fuel assemblies 22, fuel assemblies 21a, 22a provided with internal blanket having axial height of 22 cm which blanket contains depleted uranium as a main constituent are placed at radially inner portion of the core, while the fuel assemblies 21b, 21b having no internal blanket were placed in radially outer portion of the core.

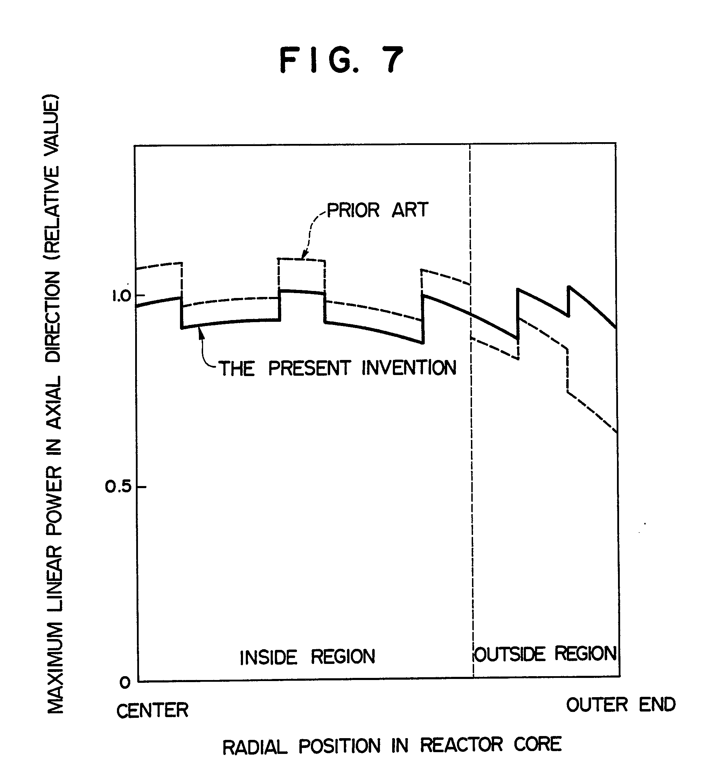

Fig. 7 shows radial distribution of axial maximum linear power as observed in a transition core (second cycle) of the reactor core of the present invention, in comparison with that observed with a conventional arrangement in which equilibrium core fuel assemblies are uniformly charged. In the prior art, the equilibrium core fuel assemblies charged in the region of core center where the neutron flux density is high exhibit large thermal output from the fuel. In the core of the invention, in contrast, transition core fuel assemblies of higher enrichment are placed in the outer peripheral region of the core where the neutron flux density is comparatively low, so that linear power is increased in this region, whereas the thermal power in the radially central portion of the core is decreased, whereby the maximum linear power is reduced by about 5%.

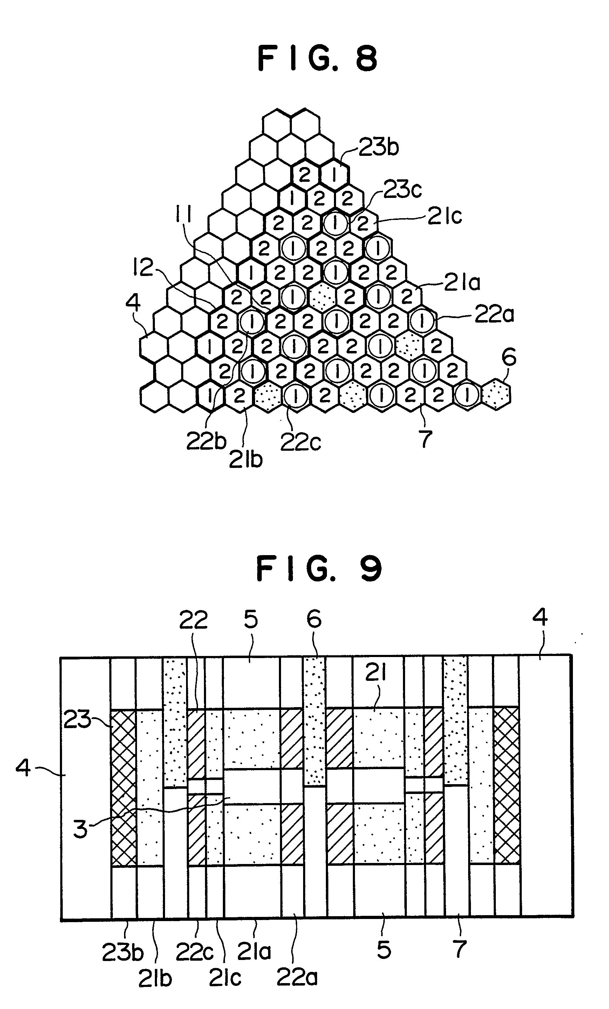

Figs. 8 and 9 are horizontal and vertical sectional views of the second embodiment of the fast neutron reactor core of the present invention, particularly in the second cycle which is subsequent to the initial core. The core structures in the third and further cycles are the same as those in the first embodiment. Numeral 21c denotes initial core fuel assemblies which have this inner blankets, while 22c denote equilibrium core fuel assemblies which have thin inner blankets. The second embodiment is characterized in that the axial thickness of the internal blanket 3 is reduced to about 12 cm along the peripheral portion of the core. This features enables a further flattening of the radial power distribution in addition to the advantages offered by the first embodiment. In consequence, the maximum temperature of the cladding tubes is decreased to improve the soundness of the fuel assemblies.

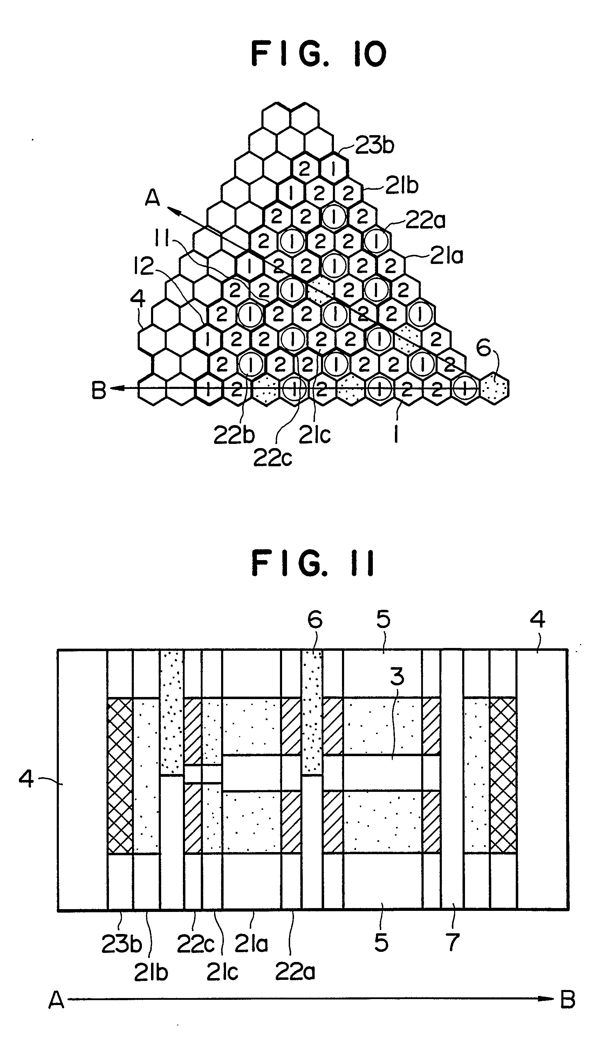

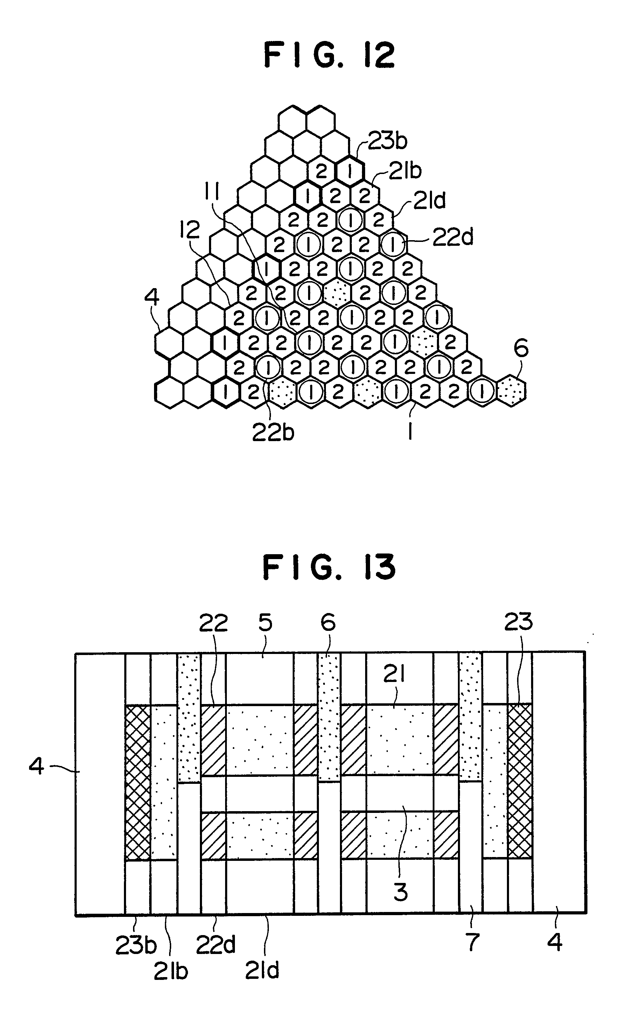

Figs. 10 and 11 are horizontal and vertical sectional views of a third embodiment of the fast neutron reactor core of the present invention, particularly in the second cycle which is subsequent to the initial core. The core structures in the third and further cycles are the same as those in the first embodiment. This embodiment, as compared with the first embodiment, is characterized in that the axial thickness of some internal blanket 3 is reduced to about 12 cm which internal blanket are placed in the peripheral part of the core and which internal blanket are placed around control rods 6 inserted into the core during operation of the reactor. In three control rods 6 shown in Fig. 11, the control rod 6 shown at the right side, which is disposed in a peripheral portion of the core, is not intended to be inserted into the core during the reactor operation, so that the thickness of the internal blanket 3 is not decreased in this portion. According to this arrangement, it is possible to enhance the level of the thermal power around the control rods. In addition, it is possible to reduce the number of the control rods to be inserted during the reactor operation, and to start the operation with these control rods fully inserted. Thus, the third embodiment offers, in addition to the advantages brought about by the first embodiment, further flattening of the power distribution in radial, circumferential and axial directions, thus attaining a further increase in the thermal margin of the reactor core.

Figs. 12 and 13 are horizontal and vertical sectional views of a fourth embodiment of the fast neutron reactor core of the present invention, particularly in the second cycle which is subsequent to initial core. The core structures in the third and further cycles are the same as those in the first embodiment. Numeral 21d denote initial core fuel assemblies having internal blanket at their lower portions, while numeral 22d denote equilibrium core fuel assemblies having internal blanket at their lower portions. In comparison with the first embodiment, the fourth embodiment is characterized in that the internal blanket 3 has axial center which is about 4 cm below the axial center of the core. This arrangement enables the power distribution to be flattened when the control rods have been inserted to a half depth from the upper side of the core, thus increasing thermal margin of the core, in addition to the advantages offered by the first embodiment.

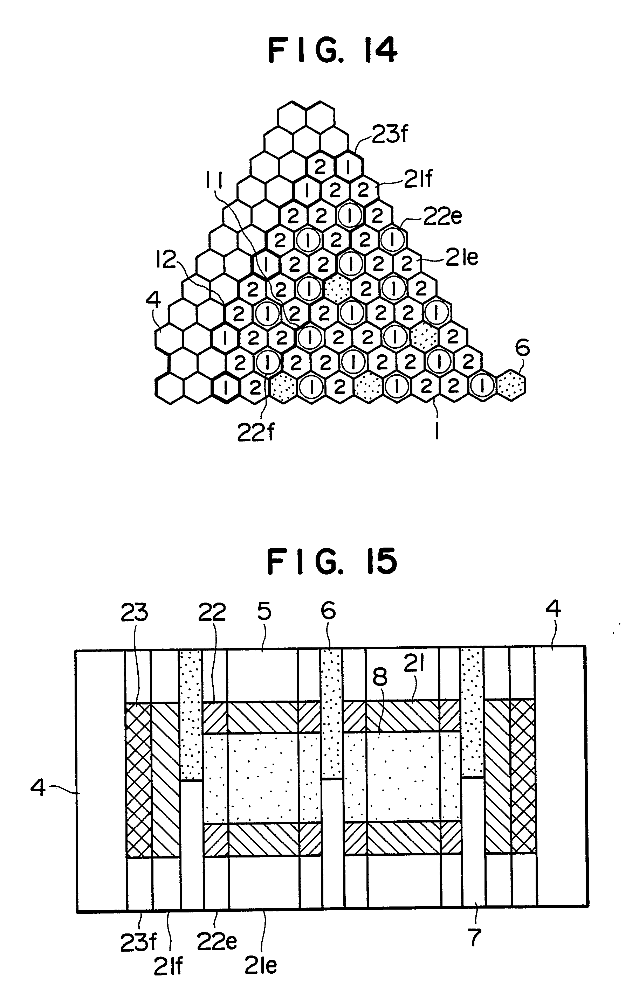

Figs. 14 and 15 are horizontal and vertical sectional views of a fiffh embodiment of the fast neutron reactor core of the present invention, particularly in the second cycle which is subsequent to the initial core. The core structures in the third and further cycles are the same as those in the first embodiment. In comparison with the first embodiment, this fifth embodiment is characterized in that the internal blanket 3 used in the first embodiment is replaced by a disk-shaped portion 8 containing a fuel of a lower plutonium enrichment than in radially or axially outer region 12. This disk-shaped portion 8 will be referred to as "an internal core 8". The internal core 8 is about 60 cm in height and about 240 cm in diameter. The plutonium enrichment is about 12% both in the fuel assemblies of the initial core and fuel assemblies of the equilibrium core. Numerals 21e and 22e respectively show initial core fuel assemblies and equilibrium core fuel assemblies both of which have internal core portions forming the internal core 8, while 21f and 22f denote initial core fuel assemblies and equilibrium core fuel assemblies which are devoid of such internal core portions. According to this arrangement, a further flattening of the axial power distribution and, hence, a greater thermal margin, are offered in addition to the advantages brought about by the first embodiment.

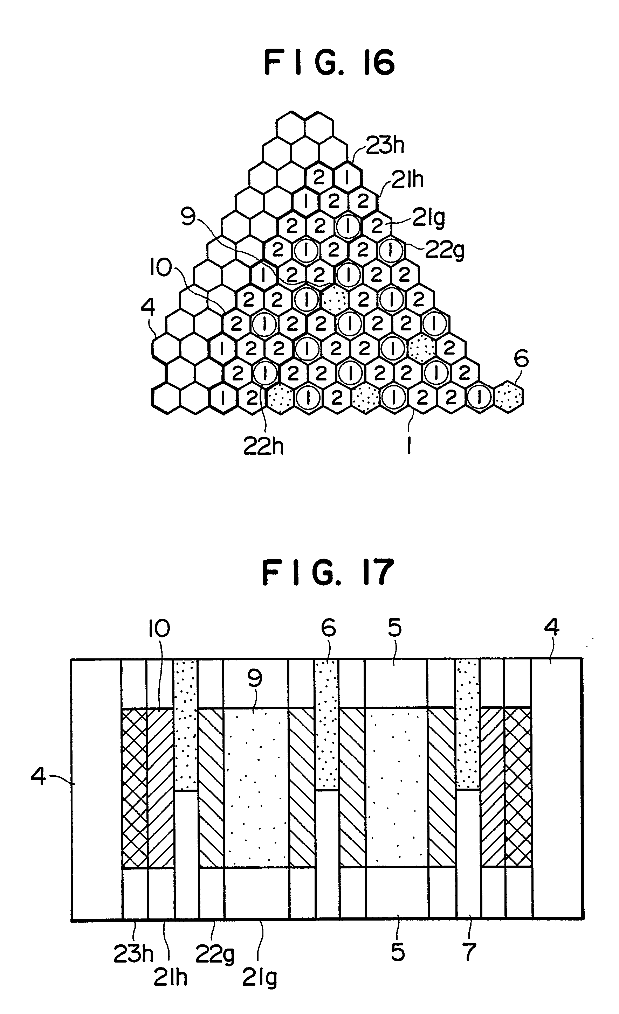

Figs. 16 and 17 are horizontal and vertical sectional views of a sixth embodiment of the fast neutron reactor core of the present invention, and show the second cycle which is subsequent to the initial core. The core structures in the third and further cycles are the same as those in the first embodiment. In comparison with the first embodiment, the sixth embodiment is characterized in that the internal blanket 3 used in the first embodiment is omitted and, instead thereof, the core 1 is constituted by both an inner core portion 9 in which the plutonium enrichment of equilibrium core fuel is as low as about 16% and an outer core portion 10 in which the plutonium enrichment of equilibrium core fuel is as high as about 21%. The plutonium enrichment of the initial core fuel assemblies is about 15% in the inner core portion 9 and about 20% in the outer core portion 10 while the plutonium enrichment of the transition core fuel assemblies is about 25%. Numerals 21g and 22g denote, respectively, initial core fuel assemblies and equilibrium core fuel assemblies which form the inner core portion 9, while 21h and 22h denote, respectively, initial core fuel assemblies and equilibrium core fuel assemblies which form the outer core portion 10. This arrangement provides power distribution flattening effect substantially equivalent to that offered by the first embodiment.

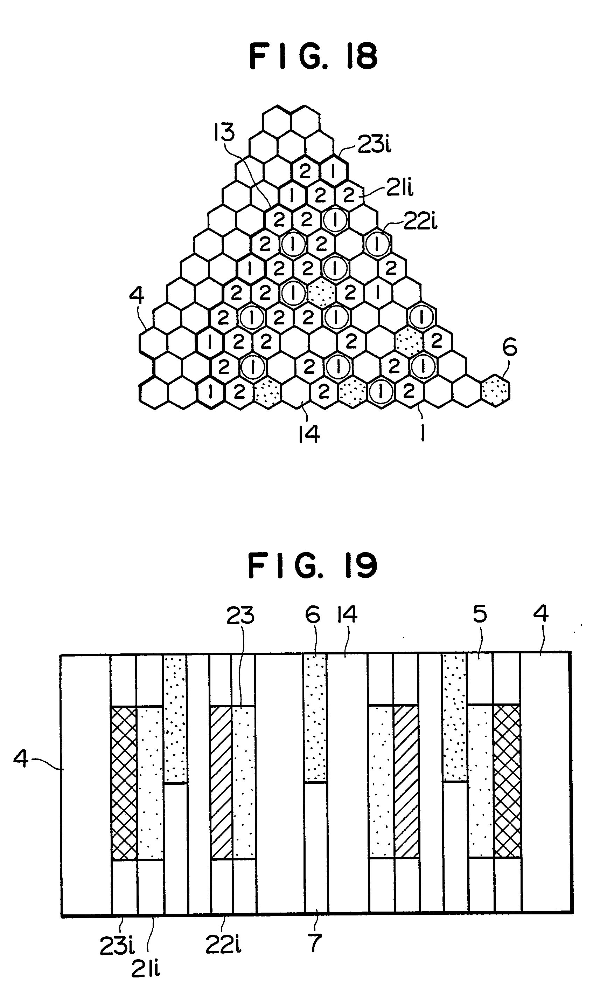

Figs. 18 and 19 are horizontal and vertical sectional views of a seventh embodiment of the fast neutron reactor core of the present invention, and show the second cycle which is subsequent to the initial core. The core structures in the third and further cycles are the same as those in the first embodiment. In comparison with the first embodiment, the sixth embodiment is characterized in that no internal blanket 3 used in the first embodiment is disposed and, instead thereof, the core 1 is constructed to have a radially heterogeneous core which is composed of both a region 13 in which the plutonium enhancement degree of the equilibrium core fuel is about 21% and an internal blanket 14 provided at the inner portion of the core with the same fuel assemblies as those forming the radial blanket. The plutonium enhancement degree is about 20% in the initial core fuel assemblies and about 35% in the transition core fuel assemblies. Numeral 21i denotes initial core fuel assemblies, while 22i denotes equilibrium core fuel assemblies. This arrangement provides power distribution flattening effect substantially equivalent to that offered by the first embodiment.

A description will now be given of an embodiment in which the core arrangement is changed from homogeneous core to axially heterogeneous core.

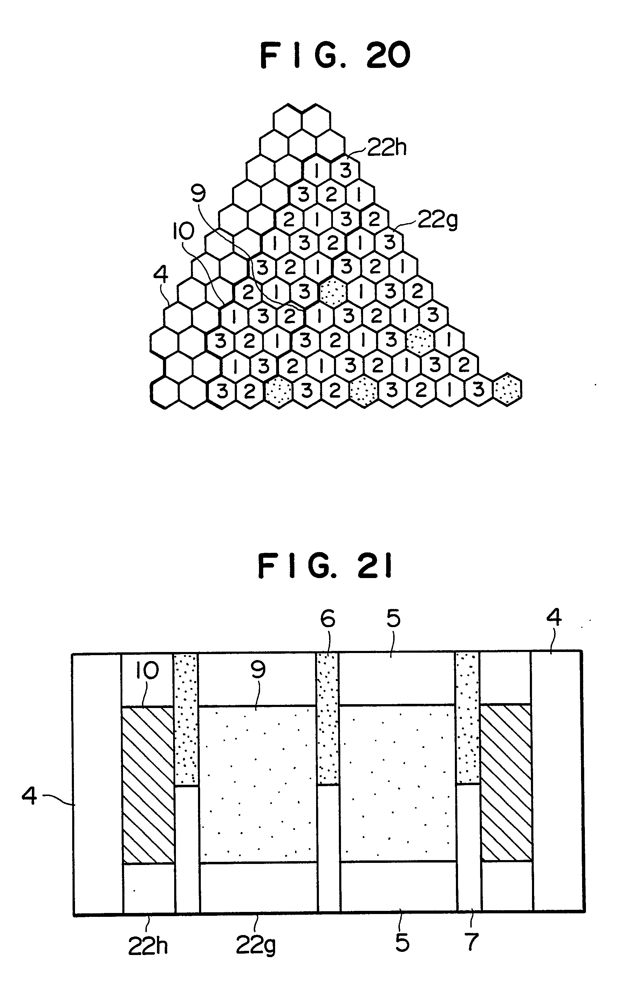

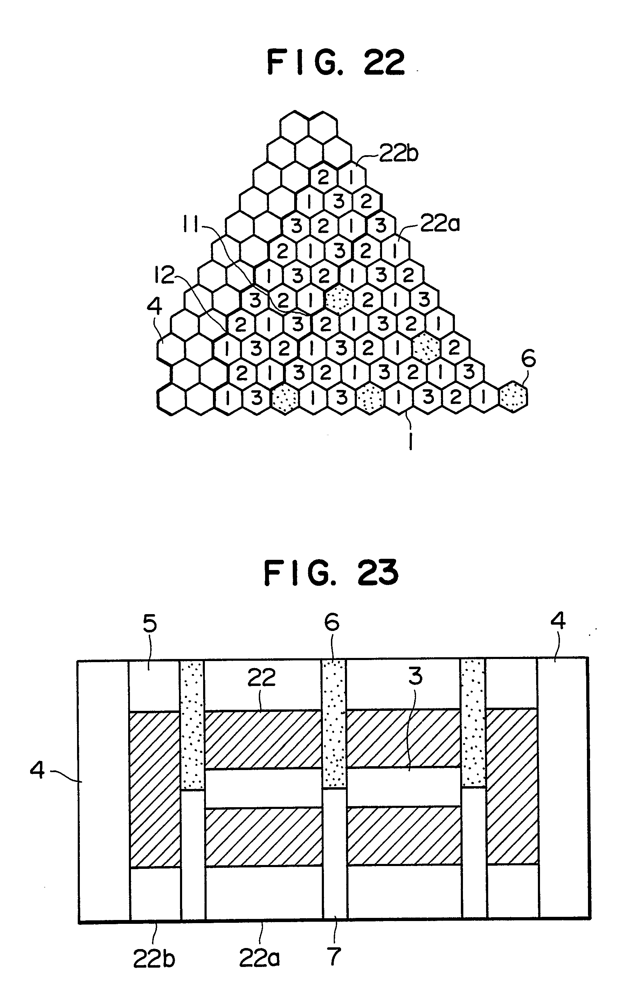

Figs. 20 and 21 show a homogeneous core which is in the state of equilibrium core. The core 1 is composed of an inner core portion 9 having a comparatively low plutonium enrichment degree of about 16% and an outer core portion 10 having a comparatively high plutonium enrichment of about 21%.

Figs. 22 and 23 show an axially heterogeneous core after a change from the homogeneous core. In order to flatten the neutron flux density distribution and the power distribution, a disk-shaped internal blanket 3, which is composed mainly of depleted uranium, is disposed in the inner part of the core 1. The thickness of the internal blanket and the plutonium enrichment of the fuel in this blanket are the same as those of the equilibrium core in the first embodiment.

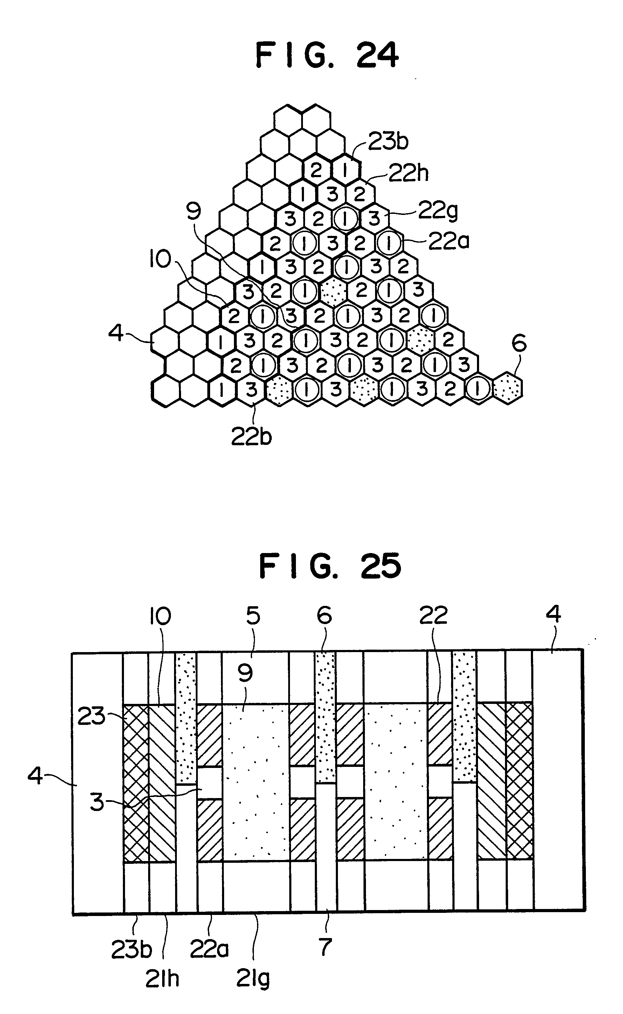

Figs. 24 and 25 show the core configuration of an eighth embodiment of the present invention, and show a course of transition from the homogeneous core of Figs. 20 and 21 to the axially heterogeneous core shown in Figs. 22 and 23. The homogeneous core of Figs. 20 and 21 will be referred to as "core of 0th cycle". The core shown in Figs. 24 and 25 is of a cycle subsequent to the 0th cycle and, hence, will be referred to as "core of the first transition cycle". This core of the first transition cycle is obtained by replacing about 1/3 of the homogeneous core fuel assemblies 22g loaded in the inner core portion 9 with axially heterogeneous core fuel assemblies 22a having internal blanket, replacing about 1/3 of the homogeneous core fuel assemblies 22h loaded in the portion of the outer core portion 109 other than the outer periphery thereof with axially heterogeneous core fuel assemblies 22b having no internal blanket, and replacing about 1/3 of the homogeneous core fuel assemblies 22h loaded in the outer peripheral portion of the outer core portion 10 with transition core fuel assemblies 23b having a plutonium enrichment of about 25%.

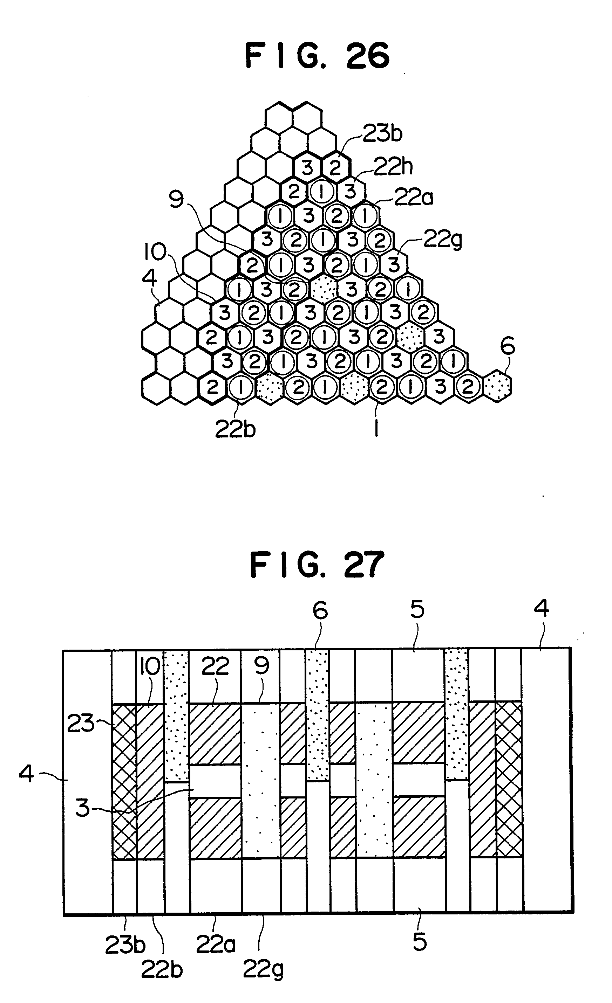

Figs. 26 and 27 show the core in the second transition cycle. About 1/2 of the homogeneous core fuel assemblies 22g, 22h existed in the first transition cycle core shown in Figs. 24 and 25 has been replaced with axially heterogeneous core fuel assemblies 22a, 22b, respectively.

Figs,. 28 and 29 show the core in the third transition cycle, in which the remainder of the homogeneous core fuel assemblies existed in the second transition cycle core of Figs. 26 and 27 has been replaced with axially heterogeneous core fuel assemblies 22a, 22b, respectively.

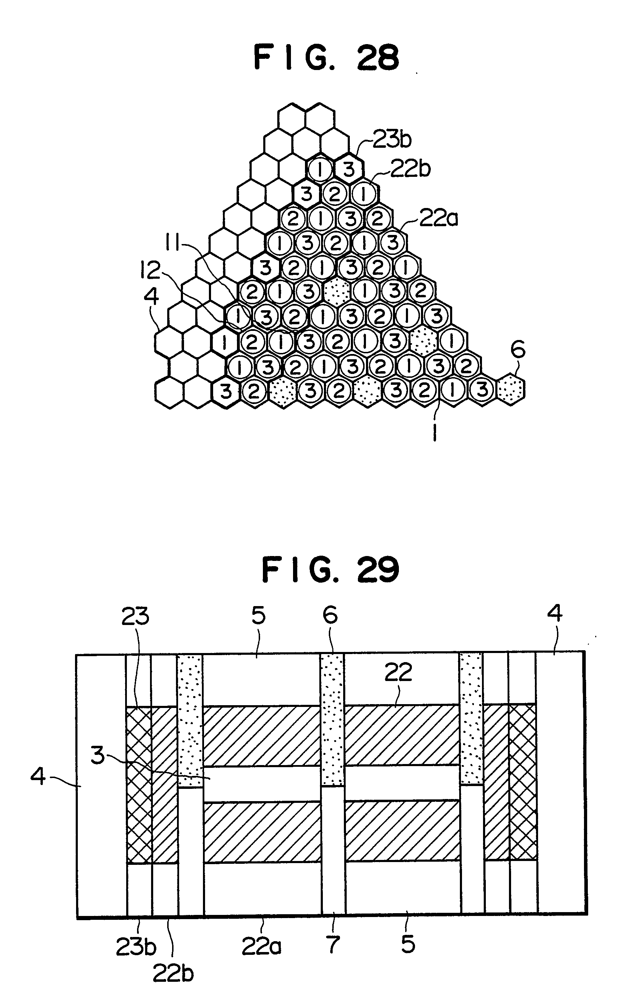

In the fourth transition cycle, the transition core fuel assemblies 23b charged in the third transition cycle core shown in Figs. 28 and 29 are replaced with axially heterogeneous core fuel assemblies 22b so that a core constitution of Figs. 22 and 23 is obtained, with the result that there is completed the transition from the homogenous core to the axially heterogeneous core.

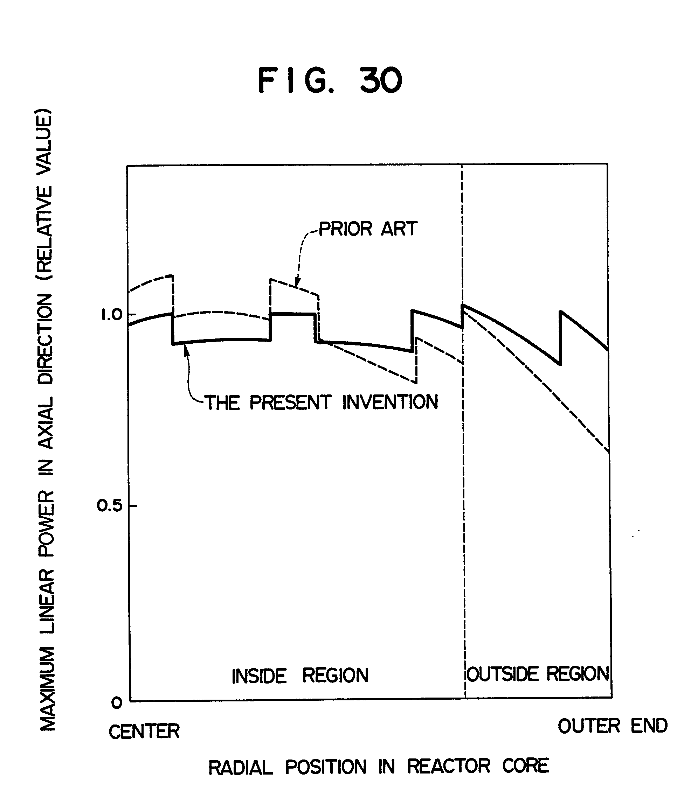

Fig. 30 shows the radial distribution of the axial maximum linear power in the first transition cycle core of this embodiment, in comparison with a conventional arrangement in which axially heterogeneous core fuel assemblies 22a, 22b are uniformly disposed in the core 1.

In the conventional arrangement, a large power peak occurs in the equilibrium core fuel assemblies loaded in the central portion of the core where the neutron flux density is high. On the other hand, in the core of the embodiment, the power level is increased in the peripheral portion of the core where the neutron flux density is comparatively low, because this peripheral portion of the core is loaded with transition core fuel having high plutonium enrichment. For the same reason, the thermal power level is decreased in the radially central portion of the core. In consequence, the maximum linear power can be decreased by 5%.

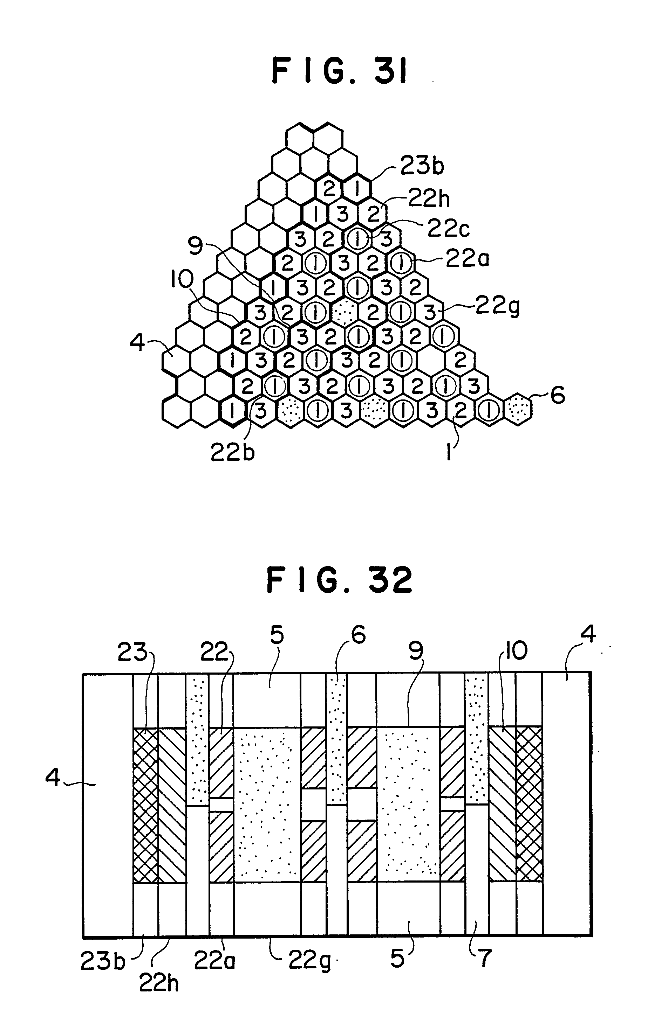

Figs. 31 and 32 are horizontal and vertical sectional views of a ninth embodiment of the fast neutron reactor core of the present invention which core is in its first transition cycle. The core states in the second and subsequent transition cycles are the same as those of the eighth embodiment. The ninth embodiment is characterized in that the axial thickness of the internal blanket 3 is reduced to about 12 cm in the peripheral portion of the blanket. This features enables a further flattening of the radial output distribution in addition to the advantages offered by the eighth embodiment. In consequence, the maximum temperature of the cladding tubes is decreased to contribute to soundness of the fuel assemblies.

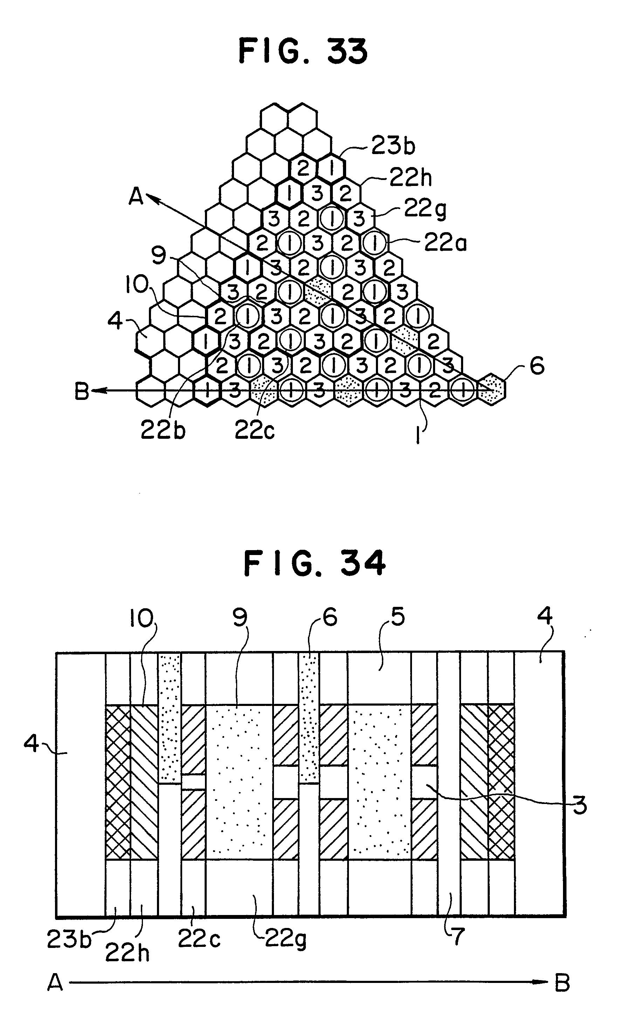

Figs. 33 and 34 are horizontal and vertical sectional views of a tenth embodiment of the fast neutron reactor core of the present invention which core is in the first transition cycle. The core configuration in the second and further cycles are the same as those in the eighth embodiment. This embodiment, as compared with the eighth embodiment, is characterized in that the axial thickness of the internal blanket 3 is reduced so that the thickness of blanket portions which are disposed in the radially peripheral part of the core and which surround control rods 6 to be inserted into the core during operation of the reactor is reduced to about 12 cm. According to this arrangement, it is possible to enhance the level of the power around the control rods. In addition, it is possible to reduce the number of the control rods to be inserted during the reactor operation, and to start the operation with these control rods fully inserted. Thus, the tenth embodiment offers, in addition to the advantages brought about by the first embodiment, further flattening of the power distribution in radial, circumferential and axial directions, thus attaining a further increase in the thermal margin of the reactor core.

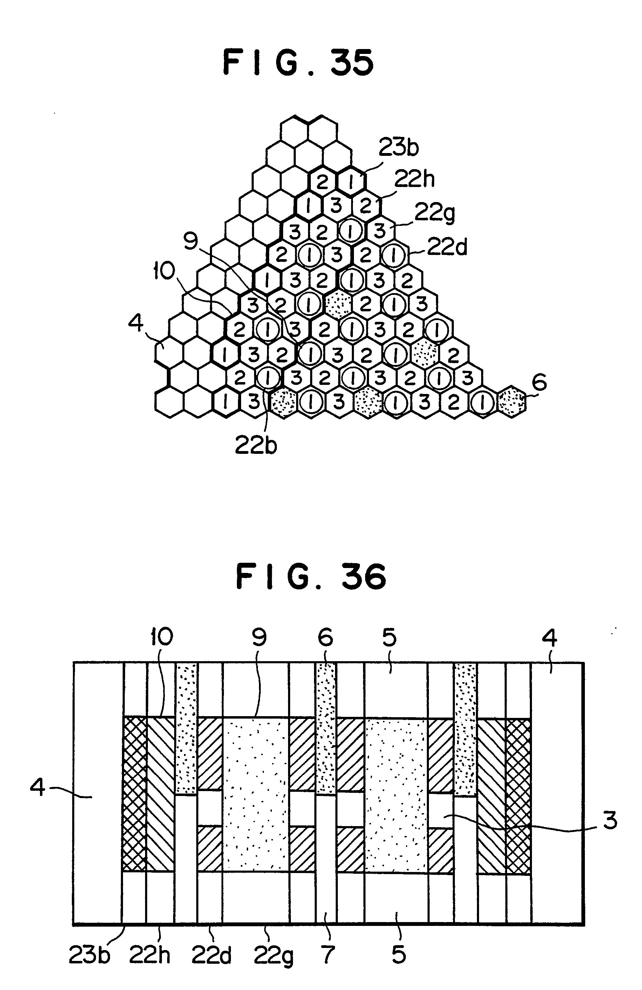

Figs. 35 and 36 are horizontal and vertical sectional views of an eleventh embodiment of the fast neutron reactor core of the present invention which core is in the first transition cycle. The core configuration in the second and further transition cycles are the same as those in the eighth embodiment. In comparison with the eighth embodiment, the tenth embodiment is characterized in that the internal blanket 3 has axial center which is about 4 cm below the axial center of the core. This arrangement enables flattening of the power distribution in a case where the control rods have been inserted to a half depth from the upper side of the core, thus increasing thermal margin of the core, in addition to the advantages of the eighth embodiment.

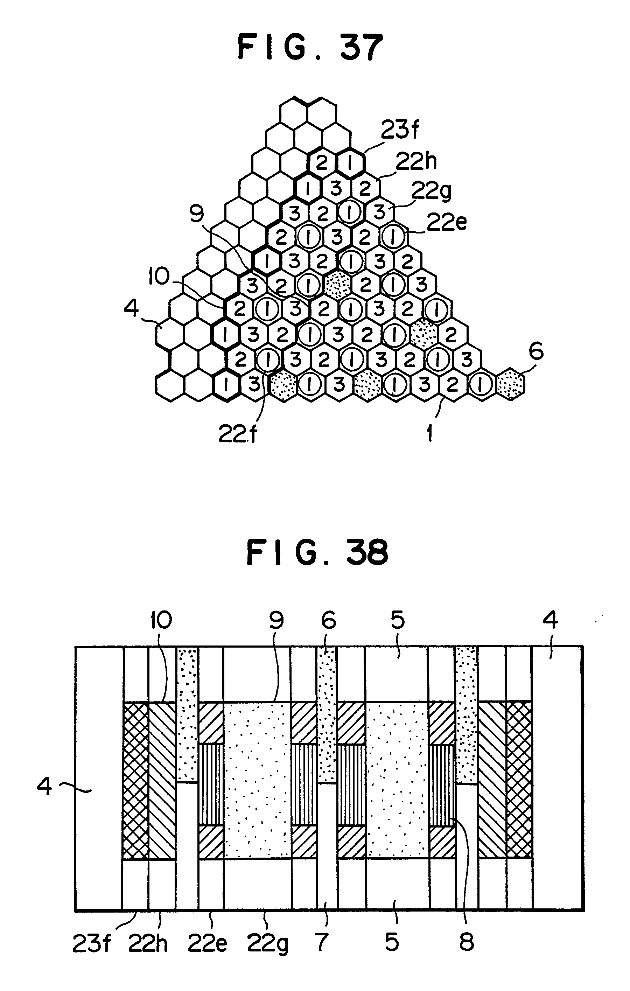

Figs. 37 and 38 are horizontal and vertical sectional views of a twelfth embodiment of the fast neutron reactor core of the present invention which core is in the first transition cycle. The core structures in the second and further transition cycles are the same as those in the eighth embodiment. In comparison with the first embodiment, this twelfth embodiment is characterized in that the internal blanket 3 used in the first embodiment is replaced by a disk-shaped region 8, (that is, internal core 8) containing a fuel of a lower plutonium enrichment than in radially or axially outer region 12.

The internal core 8 is about 60 cm in height and about 240 cm in diameter. The plutonium enrichment degree is about 12% in both the fuel assemblies initially charged and fuel assemblies used in the equilibrium core. According to this arrangement, a further flattening of the axial power distribution and, hence, a greater thermal margin, are offered in addition to the advantages brought about by the eighth embodiment.

In the embodiments described hereinabove, the neutron flux density distribution or power distribution are flattened by providing variations in the plutonium enrichment in the equilibrium core fuel assemblies and transition core fuel assemblies. It is to be understood, however, that an equivalent effect can be obtained through changing neutron infinite multiplication factor by various means such as variation in the diameter of fuel pins, pitch of the fuel pins, density of the fuel pellets, and so forth, or by omitting the wrapping tubes from some of the fuel assemblies.

For instance, an effect of flattening the power distribution equivalent to that attained by the first embodiment can be obtained by increasing the outside diameter of each fuel pin in the transition core fuel assembly 23b of the first embodiment from 0.75 cm to 0.85 cm, while increasing the volume fraction of the fuel from about 41% to about 45%.

It is also to be understood that various types of fuel, neutron absorber, structural material and coolant can be used. Although the described embodiments employ a mixed oxide of pelletized uranium and plutonium as the fuel, boron carbide as the neutron absorber, stainless steel as the structural material and sodium as the coolant.

As has been described, the fast neutron reactor core of the invention and the fuel renewing method of the invention enable about 5% increase in the thermal margin without increasing the number of fuel assemblies to be replaced in one cycle, as compared with the prior art, thus offering a corresponding reduction in the fuel cycle cost. Furthermore, since the excess reactivity of the core can be maintained, it is possible to prevent any reduction in the rate of operation of the nuclear reactor which reduction occurs due to the shortening of the operation period in the transition cycle.

## Claims

1. A fast neutron reactor core (1) comprising a bundle of fuel assemblies each containing a fuel made of a fissile material-enriched fertile material, characterized in that, in a transition cycle between an initial charging cycle and an equilibrium cycle of said core (1), a fuel assembly in a peripheral portion (12) of said core (1) is replaced with a fuel assembly (23b) containing a fuel having a greater neutron infinite multiplication factor than the fuel in said equilibrium cycle.

2. A fast neutron reactor core according to Claim 1, wherein the bundled fuel assemblies form a disk-shaped internal blanket (3) near the axially mid portion of said core (1), said internal blanket (3) having an axial thickness smaller than the height of said core 1 and a diameter smaller than that of said core (1).

3. A fast neutron reactor core comprising a bundle of fuel assemblies each having a fissile material-enriched fertile material, said fuel assemblies being arranged to form a plurality of regions in the radial direction of said core (1) so that the neutron infinite multiplication factor of a radially outer region (12) is greater than that of a radially inner region (11), characterized in that the fuel assemblies loaded near one boundary of said regions and fuel assemblies loaded in the region inside said boundary have been replaced with axially heterogeneous fuel assemblies which contain at an axially mid portion thereof an inner blanket (3) made of a fertile material, and that fuel assemblies loaded in an outer peripheral portion of said core have been replaced with fuel assemblies (23b) containing a fuel having a greater neutron infinite multiplication factor than that of the fuel contained in said axially heterogeneous fuel assemblies (22b).

4. A fast neutron reactor core according to Claim 3, wherein not only the fuel assemblies of said region inside said boundary but also a part of fuel assemblies of the region of the outside of said boundary has been replaced with axially heterogeneous fuel assemblies (22b, 23b).

5. A fast neutron reactor core according to one of Claims 2 to 4, wherein the axial thickness of said internal blanket (3) is greatest at radially central part of said core and is decreased towards the periphery of said core.

6. A fast neutron reactor core according to any one of Claims 2 to 4, wherein the axial thickness of said internal blanket (3) is greatest at radially central part of said internal blanket (3) and is decreased at the portions surrounding control rods (6) disposed at the peripheral portion of said core which control rod is inserted during operation of said core (1).

7. A fast neutron reactor core according to any one of Claims 2 to 6, wherein the axial center of said internal blanket (3) is below the axially mid portion of said core (1).

8. A fast neutron reactor core according to one of Claims 2 to 7, wherein a fuel having a smaller neutron infinite multiplication factor than that of fuel in the outer peripheral region of said core (1) is loaded in place of said internal blankets (3).

9. A fast neutron reactor core according to Claim 1, wherein said core is sectioned in the radial direction into a plurality of regions, (11, 12), the neutron infinite multiplication factor of the fuel disposed in the regions being increased from a radially inner region (11) towards a radially outer region (12).

10. A fast neutron reactor core according to Claim 1, wherein a blanket assembly having an axial height not smaller than the height of the core (1) and made of a fertile material is loaded in a radially inner portion (11) of said core (1).

11. A fast neutron reactor core according to one of Claims 1 to 10, wherein the enrichment of the fissile material is varied to vary the neutron infinite multiplication factor.

12. A fast neutron reactor core according to one of Claims 1 to 10, wherein the volume fraction of the fuel contained in the fuel assemblies is varied to vary the neutron infinite multiplication factor.

13. A fast neutron reactor core according to any one of Claims 1 to 10, wherein the volume fraction of the fuel contained in the fuel assemblies and the enrichment of the fissile material are varied to vary the neutron infinite multiplication factor.

14. A method of refueling in fast neutron reactor core comprising a bundle of fuel assemblies each containing a fuel made of a fissile material-enriched fertile material, said method comprising the steps of: replacing, in a transition cycle between an initial charging cycle and an equilibrium cycle of said core (1), a fuel assembly in a peripheral portion 12 of said core with another fuel assembly (23b) containing a fuel having a greater neutron infinite multiplication factor than that (22b) of fuel in said equilibrium cycle.

15. A method according to Claim 14, wherein the fuel assemblies are bundled to form a disk-shaped internal blanket (3) near the axially mid portion of said core, (1) said internal blanket having an axial thickness smaller than the height of said core (1) and a diameter smaller than that of said core (1).

16. A method of refueling in a fast neutron reactor core having a bundle of fuel assemblies each having a fissile material-enriched fertile material, said fuel assemblies being arranged to form a plurality of regions (11, 12) in the radial direction of said core so that the neutron infinite multiplication factor of a radially outer region (11) is greater than that of a radially inner region, said method comprising the steps of: replacing the fuel assemblies loaded near the boundary of said regions and fuel assemblies loaded in the region inside said boundary with axially heterogeneous fuel assemblies which contain at an axially mid portion thereof an internal blanket (3) made of a fertile material; and replacing fuel assemblies loaded in a peripheral portion (12) of said core (1) with fuel assemblies containing a fuel having a greater neutron infinite multiplication factor than that of the fuel contained in said axially heterogeneous fuel assemblies.

17. A method according to Claim 16, wherein not only the fuel assemblies of said region (11) inside said boundary but also part of fuel assemblies of the region (12) outside said boundary has been replaced with axially heterogeneous fuel assemblies.

18. A method according to one of Claims 15 to 17, wherein the axial thickness of said internal blanket is greatest at radially central part of said core (1) and is decreased towards the periphery end of said core (1).

19. A method according to any one of Claims 15 to 17, wherein the axial thickness of said internal blanket is greatest at radially central part of said core and is decreased at the portions surrounding control rods disposed at the peripheral portion of said core which control rod is inserted during operation of said core.

20. A method according to any one of Claims 15 to 19, wherein the axial center of said internal blanket (3) is below the axially mid portion of said core.

21. A method according to one of Claims 15 to 20, wherein a fuel having a smaller neutron infinite multiplication factor than that of fuel in the outer peripheral region (12) of said core is loaded in place of said internal blanket (3).

22. A method according to Claim 14, wherein said core is sectioned in the radial direction into a plurality of regions, the neutron infinite multiplication factor of the fuel disposed in the regions being increased from a radially inner region (11) towards a radially outer region (12).

23. A method according to Claim 14, wherein a blanket assembly having an axial height not smaller than the height of the core (1) and made of a fertile material is loaded in a radially inner portion (11) of said core (1).

24. A method according to one of Claims 14 to 23, wherein the enrichment of the fissile material is varied to vary the neutron infinite multiplication factor.

25. A method according to one of Claims 14 to 23, wherein the volume fraction of the fuel contained in the fuel assemblies is varied to vary the neutron infinite multiplication factor.

26. A method according to one of Claims 14 to 23, wherein the volume fraction of the fuel to the fuel assemblies and the enrichment of the fissile material are varied to vary the neutron infinite multiplication factor.

EP 0 387 891 A2

# FIG. 1

# FIG. 2

# FIG. 3

# FIG. 4

# F I G. 5

# F I G. 6

# F I G. 7

# F I G. 8

# F I G. 9

# FIG. 10

# FIG. 11

# F I G. 12

# F I G. 13

# F I G. 14

# F I G. 15

# F I G. 16

# F I G. 17

# F I G. 18

# F I G. 19

## F I G. 20

## F I G. 21

# FIG. 22

# FIG. 23

# FIG. 24

# FIG. 25

# F I G. 26

# F I G. 27

# FIG. 28

# FIG. 29

# F I G. 30

# F I G. 31

# F I G. 32

# FIG. 33

# FIG. 34

# FIG. 35

# FIG. 36

# FIG. 37

# FIG. 38

# F I G. 39

| | | |
|---|---|---|
| REACTOR THERMAL POWER | MW | ABOUT 2,600 |
| ELECTRIC POWER | MW | ABOUT 1,000 |
| OPERATION PERIOD | EFPM* | 12 |
| BATCH NUMBER OF FUEL RENEWAL | | |
| CORE/RADIAL BLANKET | | 3/4 |
| AVERAGE DISCHARGED BURN-UP | GWd/t | 90 |
| DIAMETER OF REACTOR CORE /HIGHT | cm | 330/100 |
| THICKNESS OF INNER BLANKET | cm | 22 |
| THICKNESS OF BLANKET | cm | |
| RADIAL/AXIAL | | 30/35 |
| NUMBER OF FUEL ASSEMBLY | | |
| CORE/BLANKET | | 354/150 |
| VOL. FRACTION OF CONSTITUEUTS | % | |
| (FUEL/COOLANT /CONSTRUCTION MATERIAL) | | |
| CORE, AXIAL BLANKET | | 41/36/23 |
| RADIAL BLANKET | | 51/30/19 |
| FUEL | | |
| INITIAL CORE FUEL | | 20% $PuO_2$-DEPLETED $UO_2$ |
| EQUILIBRIUM CORE FUEL | | 21% $PuO_2$-ENRICHED $UO_2$ |
| TRANSITION CORE FUEL | | 25% $PuO_2$-ENRICHED $UO_2$ |
| BLANKET | | DEPLETED $UO_2$ |
| FUEL SMEAR DENSITY %THEORETICAL DENSITY | | |
| CORE/BLANKET | | 88/92 |
| NEUTRON ABSORBER | | $B_4C(^{10}B$ 80% ENRICHMENT) |
| CONSTRUCTION MATERIAL /COOLANT MATERIAL | | SUS316/Na |
| PIN INNER DIAMETER OF CORE FUEL/OUTER DIAMETER | cm | 0.67/0.75 |
| RADIAL BLANKET | | |
| FUEL PIN INNER DIAMETER /OUTER DIAMETER | cm | 1.08/1.16 |
| FUEL PIN NUMBER PER ASSEMBLY | | |
| CORE/RADIAL BLANKET | | 271/127 |

* EFFECTIVE FULL POWER MONTH